# EUROPEAN PATENT APPLICATION

(11) **EP 2 458 083 A2**
(43) Date of publication of application: **30.05.2012**
(21) Application number: 11184469.2
(22) Date of filing: 10.10.2011
(51) Int. Cl.: D06M 11/83, D06M 15/263, D06M 15/356, D06M 15/27, D06M 15/643, D06M 15/647, D06M 16/00

(54) **Method for durable fabric antimicrobial treatment**

(30) Priority: 23.11.2010 US 416337 P
(71) Applicant: Rohm and Haas Company, Philadelphia, PA 19106-2399 (US)
(72) Inventor: Ghosh, Tirthankar, Oreland, PA Pennsylvania 19075 (US)
(74) Representative: Buckley, Guy Julian

(57) **Abstract**

The present invention provides an aqueous composition useful for treating fabric comprising
(i) a complex of silver ion with a copolymer and
(ii) a dispersed amine-functional softener,

wherein said copolymer comprises
(a) 60-95 wt % polymerized units of one or more monomer X, wherein said monomer X is an ethylenically unsaturated compound having a substituent group selected from an unsaturated or aromatic heterocyclic group having at least one nitrogen atom; and
(b) 5-40 wt % polymerized units of one or more monomer Y, wherein said monomer Y is an ethylenically unsaturated compound selected from carboxylic acids, organosulfuric acids, sulfonic acids, phosphonic acids, esters comprising polymerized units of ethylene oxide, and mixtures thereof.

Also provided is a method of treating fabric comprising contacting said fabric with the composition of claim 1 at pH from 3 to 7.

## Description

The present invention relates to a composition useful for treating fabric. The composition contains a silver-polymer complex and a softener which are introduced into a fabric to provide a treated fabric.

US Patent Publication US 2010/0229311 describes a composition useful for treating fabrics. The composition described in US 2010/0229311 contains a silver-polymer complex and a variety of optional additional ingredients. The disclosure of US 2010/0229311 does not discuss the issue of whether or not the fabric treatments described therein are resistant to removal by laundering.

The problem addressed by this invention is to provide a composition that is capable of introducing a biocidal silver material to a fabric, of providing improved softness to the fabric, and of providing improved resistance to removal of biocidal silver material by laundering.

The present invention is defined as follows.

The present invention is directed to a composition useful for treating fabric. In one aspect, the present invention provides an aqueous composition useful for treating fabric comprising
(i) a complex of silver ion with a copolymer and
(ii) a dispersed amine-functional softener,
wherein said copolymer comprises
(a) 60-95 wt % polymerized units of one or more monomer X, wherein said monomer X is an ethylenically unsaturated compound having a substituent group selected from an unsaturated or aromatic heterocyclic group having at least one nitrogen atom; and
(b) 5-40 wt % polymerized units of one or more monomer Y, wherein said monomer Y is an ethylenically unsaturated compound selected from carboxylic acids, organosulfuric acids, sulfonic acids, phosphonic acids, esters comprising polymerized units of ethylene oxide, and mixtures thereof.

In another aspect, the present invention provides a method of treating fabric comprising contacting said fabric with the composition of claim 1 at pH from 3 to 7.

The term "copolymer" as used herein and in the appended claims refers to polymers polymerized from at least two different monomers. All percentages herein are by weight (wt %), unless specified otherwise. Percentages of monomers are based on total copolymer weight.

The term "aqueous" as used herein and in the appended claims means water and mixtures composed substantially of water and water miscible solvents.

As used herein and in the appended claims, when a material is said to be "dispersed," it is meant that that material is present in the form of relatively small, discrete particles that are distributed throughout a continuous liquid medium. The median particle size of the dispersed particles is 5 nanometers to 10 micrometers. The particles may be solid or liquid or a combination thereof. Particles that are considered "dispersed" do not settle; that is, when the composition that contains dispersed particles is allowed to stand at 25°C for 24 hours, 50% or more of the particles by weight based on the weight of all the particles remain dispersed throughout the continuous liquid medium (i.e., those particles neither settle to the bottom nor float to the top). To assist particles to resist settling, a dispersion aid may be used, such as, for example, a dispersant, a surfactant, an emulsifier, a solubilizer, or a mixture thereof.

Dispersed materials are not soluble in the continuous liquid medium. That is, the solubility of a dispersed material in the continuous liquid medium at 20°C is 0.1% by weight or less, based on the weight of the continuous liquid medium. When individual molecules of a material are distributed throughout a continuous liquid medium, that material is said herein to be dissolved and is not said herein to be dispersed.

The term "fabric" as used herein and in the appended claims means a textile made from fibers. Fabric may be woven or nonwoven. Fabric suitable for treatment according to this invention includes fabric made from fibers or combination of fibers of any composition, including, e.g., silk, cotton, wool, flax, fur, hair, cellulose, ramie, hemp, linen, wood pulp, polyolefins, such as polyethylene, polypropylene and polybutylene; halogenated polymers, such as polyvinyl chloride; polyaramids, such as poly-p-phenyleneteraphthalamid (e.g. KEVLAR® fibers available from DuPont), poly-m-phenyleneteraphthalamid (e.g., NOMEX® fibers available from DuPont); melamine and melamine derivatives (e.g., BASOFIL® fibers available from Basofil Fibers, LLC); polyesters, such as polyethylene terephthalate, polyester/polyethers; polyamides, such as nylon 6 and nylon 6,6; polyurethanes, such as TECOPHILIC® aliphatic thermoplastic polyurethanes available from Noveon; acetates; rayon acrylics; and combinations thereof. Preferred fabrics include cotton, polyester, cotton-polyester blends and polyolefins. In preferred embodiments of the invention, the fabric comprises at least 40% polyester fibers, by weight based on the weight of the fabric. More preferred are fabrics in which the amount of polyester fiber is, by weight based on the weight of the fabric, at least 50%, more preferably at least 60%, more preferably at least 70%, more preferably at least 80%, more preferably at least 90%.

The use of the term "(meth)" followed by another term such as acrylic, acrylate, acrylamide, etc., as used herein and in the appended claims, refers to, for example, both acrylic and methacrylic; acrylate and methacrylate; acrylamide and methacrylamide; etc.

The glass transition temperature ("Tg") for the copolymers of the present invention may be measured by differential scanning calorimetry (DSC) taking the mid-point in the heat flow versus temperature transition as the Tg value.

As used herein, the statement that the amount of a certain ingredient is a specific wt% or less means that the amount of that certain ingredient is either zero or else is a non-zero amount that is less than or equal to that specific wt%.

In preferred embodiments of the present invention, the copolymer comprises at least 20 wt% units of monomer X, more preferably at least 30 wt%, more preferably at least 40 wt%, more preferably at least 50 wt%. In preferred embodiments, the copolymer comprises no more than 92 wt% units of monomer X; more preferably no more than 90 wt%; more preferably no more than 88 wt%; more preferably no more than 80%; more preferably no more than 75 wt%; more preferably no more than 70 wt%.

In preferred embodiments, the copolymer comprises no more than 60% units of monomer Y, more preferably no more than 55 wt%, more preferably no more than 50 wt%, more preferably no more than 45 wt%. In preferred embodiments, the copolymer comprises at least 10 wt%, more preferably at least 18 wt%, more preferably at least 25 wt%, more preferably at least 30 wt%, more preferably at least 35 wt%.

In preferred embodiments of the present invention, monomer X is selected from vinylimidazoles, vinylimidazolines, vinylpyridines, vinylpyrroles, derivatives thereof and combinations thereof. In more preferred embodiments, monomer X is selected from vinylimidazoles, vinylpyridines, derivatives thereof and combinations thereof. In more preferred embodiments, monomer X is selected from N-vinylimidazole, 2-vinylpyridine, 4-vinylpyridine and combinations thereof. In most preferred embodiments, monomer X is N-vinylimidazole (VI).

In preferred embodiments of the present invention, monomer Y is selected from carboxylic acids, organosulfuric acids, sulfonic acids, phosphonic acids, esters of polymerized units of ethylene oxide, and combinations thereof. In more preferred embodiments of the invention, esters comprising polymerized units of ethylene oxide comprise at least 2 units of ethylene oxide, more preferably at least 3, more preferably at least 4, more preferably at least 5, more preferably at least 6. The number of polymerized ethylene oxide units is calculated from the Mn (i.e., the number-average molecular weight) of the polymerized ethylene oxide chain. In preferred embodiments of the invention, the esters of polymerized units of ethylene oxide are (meth)acryloyl esters. In preferred embodiments of the invention, polymerized units of ethylene oxide are capped with a C₁-C₆ alkyl group on one end. In preferred embodiments of the invention, polymerized units of ethylene oxide have Mn of 100 or higher; more preferred is 200 or higher; more preferred is 250 or higher; more preferred is 300 or higher. In preferred embodiments of the invention, the polymerized units of ethylene oxide have Mn of 3000 or lower; more preferred is 1000 or lower; more preferred is 600 or lower; more preferred is 500 or lower.

In some embodiments of the invention, monomer Y is selected from acrylic acid (AA), methacrylic acid (MAA), itaconic acid, maleic acid, fumaric acid, 2-acrylamido-2-methylpropanesulfonic acid and its sodium salt and combinations thereof. In some aspects of these embodiments, the copolymer further comprises other ethylenically unsaturated monomers, e.g., (meth)acrylate esters, vinyl esters, (meth)acrylamides. Small amounts of hydrophobic monomers, e.g., higher alkyl (meth)acrylates (e.g., C-4 and higher), may be present to the extent they do not compromise water solubility. (Meth)acrylate esters may include esters of mixed ethylene/propylene oxides, providing that ethylene oxide residues are at least 50 wt% of the ethylene/propylene oxide residues (alternatively at least 75%, alternatively at least 90%) or that the esters of mixed ethylene/propylene oxide residues are no more than 20 wt% of the copolymer, alternatively no more than 15%, alternatively no more than 10%. In some embodiments of the invention, mixed ethylene/propylene oxide residues have Mn of at least 150, alternatively at least 300.

In preferred embodiments of the present invention, the method uses a copolymer comprising 5 wt% or less of units derived from ethylenically unsaturated monomer containing an epoxide function. In preferred aspects of these embodiments, the amount of units derived from ethylenically unsaturated monomer containing an epoxide function in the copolymer is 1 wt% or less; more preferred is 0.5 wt% or less; more preferred is 0.1 wt% or less; more preferred is 0.05 wt% or less; more preferred is 0 wt%.

In preferred embodiments of the present invention, the composition comprising a copolymer has a pH of at least 3, more preferably at least 4, more preferably at least 4.5. In preferred embodiments, the composition has a pH no greater than 7, more preferably no greater than 6.

In some embodiments of the present invention, the composition comprises polymerized units derived from a crosslinker. Crosslinkers suitable for use with the present invention include multi-ethylenically unsaturated monomers. In some aspects of these embodiments, the crosslinker derived units are derived from crosslinker selected from 1,4-butanediol diacrylate; 1,4-butanediol dimethacrylate; 1,6-hexanediol diacrylate; 1,1,1-trimethylol propane triacrylate; 1,1,1-trimethylol propane trimethacrylate; allyl methacrylate; divinylbenzene; and N-allyl acrylamide. In some aspects of these embodiments, the crosslinker derived units are derived from crosslinker selected from 1,1,1-trimethylol propane trimethacrylate. In some aspects of these embodiments, the composition comprises 0.01 to 10 wt% (based on solids) crosslinker. In some aspects of these embodiments, the composition comprises 0.01 to 5 wt% (based on solids) crosslinker. In some aspects of these embodiments, the composition comprises 0.01 to 1 wt% (based on solids) crosslinker.

In preferred embodiments of the present invention, a copolymer is used that either comprises no polymerized units derived from a crosslinker or else comprises polymerized units derived from a crosslinker in an amount that is 0.005 wt% or less. In more preferred embodiments of the present invention, a copolymer is used that comprises no polymerized units derived from a crosslinker.

When an aqueous composition contains the copolymer described herein and also contains silver in the form of Ag(I) ion, the mixture of copolymer and silver is herein called a complex of silver ion with that copolymer.

It is useful to characterize the amount of silver in the composition as a weight percentage based on the dry weight of copolymer. In preferred embodiments of the invention, the composition comprises silver in the amount of 1 wt% or more based on the dry weight of the copolymer; more preferably 2 wt% or more; more preferably 3 wt% or more; more preferably 5 wt% or more. In preferred embodiments of the invention, the copolymer comprises silver in the amount of 50 wt% or less based on the dry weight of the copolymer; more preferably 40 wt% or less; more preferably 20 wt% or less; more preferably 15 wt% or less.

Silver is in the form of Ag(I) ion, which typically is introduced in the form of silver nitrate. Methods for preparation of the copolymer have been disclosed previously, e.g., in U.S. Pat. Appl. Pub. No. US 2005/0227895, and also in the Examples herein. In some embodiments of the invention, to increase retention of silver by the treated fabric, additional copolymer is added which is not complexed with silver; and/or other amine compounds or polymers may be added. In some embodiments of the invention, the fabric treatment includes an epoxy resin, a polyurethane, or a combination thereof.

In some embodiments of the invention, an epoxy resin comprises at least a difunctional epoxy compound, i.e., a compound having at least two epoxy groups per molecule. In some aspects of these embodiments, the epoxy resin comprises bis-glycidyl ethers or esters, triglycidyl isocyanurate, 1-epoxyethyl-3,4-epoxycyclohexane, vinylcyclohexene dioxide, diglycidyl esters of dicarboxylic acids, diglycidyl ethers of diols, triols or polyols. Suitable examples of bis-glycidyl esters and ethers include bisphenol A diglycidyl ether, diglycidyl adipate; 1,4-diglycidyl butyl ether; ethylene glycol diglycidic ether; glycidyl ethers of glycerol, erythritol, pentaerythritol, trimethylol propane and sorbitol; epoxy resorcinol ethers; and diglycidyl ethers of polyethylene glycols. In some embodiments of the invention, the epoxy resin comprises a polymer of glycidyl (meth)acrylates and/or allyl glycidyl ether. In some embodiments of the invention, the epoxy resin is present in an amount that results in a 0.1:1 to 10:1 1 ratio of equivalents epoxide:equivalents X monomer unit. Preferably, the ratio is at least 0.2:1, alternatively at least 0.3:1, alternatively at least 0.5:1, alternatively at least 0.8:1. Alternatively, the ratio is no more than 7:1, alternatively no more than 5:1, alternatively no more than 4:1, alternatively no more than 3:1.

In some embodiments of the invention, an amine curing agent in addition to the copolymer is used. Such amine curing agents are well known in the art and are described, e.g., in WO 2005/080481. These curing agents include polyfunctional primary and secondary amines and some tertiary amines, including amine-containing polymers.

In some embodiments of the invention, a polyester polyurethane contains polymerized residues of a polyester polyol and a diisocyanate. The diisocyanate may be an aromatic diisocyanate, e.g., toluene diisocyanate (TDI), diphenyl methane diisocyanate (MDI), p-xylylene diisocyanate, tetramethylxylene diisocyanate, isomers thereof or mixtures thereof; or an aliphatic diisocyanate, e.g., 1,6-hexamethylene diisocyanate, hydrogenated methylenediphenyl diisocyanate (HMDI), ethylene diisocyanate, isophorone diisocyanate, cyclohexane-1,4-diisocyanate, or a mixture thereof. Among the aromatic diisocyanates, MDI is preferred, especially a mixture of 4,4' and 2,4' isomers. Preferred aliphatic diisocyanates include, e.g., 1,6-hexamethylene diisocyanate, hydrogenated methylenediphenyl diisocyanate (HMDI), isophorone diisocyanate and mixtures thereof. Polyester polyols include, e.g., hydroxyl terminated products of polyhydric alcohols such as ethylene glycol, propylene glycol, diethylene glycol, neopentyl glycol, trimethylol propane, glycerol, pentaerythritol, 1,4-butanediol, 1,6-hexanediol, furan dimethanol, cyclohexane 1,6-dimethanol, diols made from dimethyl carbonate and any of the above polyhydric alcohols or mixtures thereof with polycarboxylic acids or lactones, especially dicarboxylic acids such as succinic acid, adipic acid, glutaric acid, phthalic acids and caprolactone. Preferred polyester polyols include, e.g., those formed from adipic acid and diols selected from hexanediol, ethylene glycol, 1,4-butanediol, propylene glycol and cyclohexane-1,6-dimethylol. Preferably polyhydric alcohols having more than two hydroxyl groups are present to the extent of no more than 2 wt% of the polyol, alternatively no more than 1 wt%, alternatively no more than 0.5 wt%. In some embodiments of the invention, the polyurethane has Mn from 10,000 to 100,000 and Mw from 200,000 to 2,000,000 In some embodiments of the present invention, the polyester polyurethane is an aliphatic polyester polyurethane, i.e., it contains polymerized residues of an aliphatic polyester polyol and an aliphatic diisocyanate.

The composition of the present invention contains one or more softener. A softener is a compound that may be used to improve the softness of a fabric. Softeners include, for example, silicone compounds and cationic high-alkyl compounds. Cationic high-alkyl compounds are compounds that contain an alkyl group that has 8 or more carbon atoms and a cationic group. Cationic groups include, for example, quaternary ammonium groups.

A silicone compound is a polymer that has the repeat unit of structure (I) 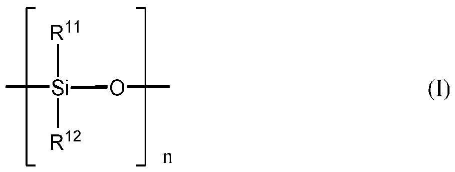 where n is 3 or higher, and R¹¹ and R¹² are each, independently, a substituted or unsubstituted organic group. Some softeners are silicone compounds (herein called "amino-functional silicones") that include one or more amino group. The amino group may be primary, secondary, tertiary, or quaternary. Preferred softeners are amino-functional silicones.

The amino group is a chemical group having the structure (II) or (II): 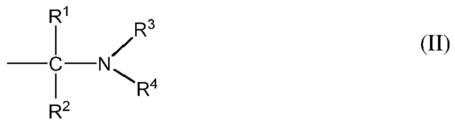 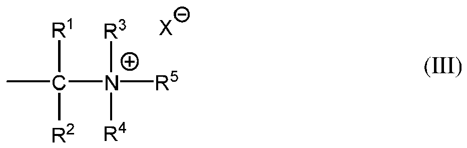 wherein each of R¹ and R² is hydrogen or an organic group in which the carbon atom shown in structure (II) is bonded to a carbon atom within R¹ and R²; wherein each of R³, R⁴, and R⁵ is hydrogen or an organic group in which the nitrogen atom shown in structure (II) or structure (III) is bonded to a carbon atom within R³, R⁴, and R⁵; and wherein X^{Θ} is an anion. A compound having an amino group is said herein to have amino functionality or, synonymously, amine functionality.

The term "amino group" as used herein does not include amido groups. An amido group has the structure (IV): 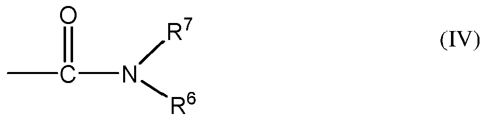 wherein R⁷ and R⁸ have the same characteristics as R³ and R⁴ as described above. In preferred embodiments, the composition contains no softener that has an amido group. In more preferred embodiments, the composition contains no softener that is not an amine-functional silicone polymer.

The composition of the present invention is aqueous. Preferably, the amount of water in the composition of the present invention, by weight based on the weight of the composition, is 50% or more; more preferably 75% or more; more preferably 90% or more.

In the composition of the present invention, the softener is dispersed.

Some embodiments of the present invention will now be described in detail in the following Examples. All fractions and percentages set forth below in the Examples are by weight unless otherwise specified. All operations in the Examples are performed at 20°C unless otherwise specified.

Copolymer solution "A" was prepared as follows.

A sample of 60% vinyl imidazole (VI) / 40% poly (ethylene glycol) methyl ether methacrylate (MPEGMA) (Mn 300) polymer was prepared according to the following procedure. After heating a 3L reaction vessel containing 847.4 ml deionized water (DiW) under nitrogen, to 85°C, a solution consisting of 182 g DiW, 30.1 g of 29% aqueous ammonia, and 12.1g of Vazo-68 (4,4'-Azobis[4-cyanopentanoic acid], CAS# 2638-94-0), was added to the reaction vessel at 1.4g/min for 150 minutes. Simultaneously a solution of 207.7 g DiW, 92.3 g vinyl imidazole (CAS# 1072-63-5), and 61.6 g poly (ethylene glycol) methyl ether methacrylate (MPEGMA, CAS# 26915-72-0, typical Mn = 300) was fed into the reaction flask at 4.0g/min for 120 minutes, followed by a DiW rinse of 200g fed at 4.8g/m for 30 min. The reaction mixture was held at 85°C for 15 minutes, and a second mixture of 40.1g DiW, 10.3 g of 29% aqueous ammonia, and 2.1g of Vazo-68, was added to the reaction vessel at 0.34g/min for 90 minutes, followed by a hold of 120 min at 85°C, and a rinse of 32g DiW. The mixture was then cooled to room temperature, resulting in a clear, pale yellow solution of pH 9.0 and 19.9% Solids.

Solution "B" of silver-polymer complex was prepared as follows by mixing the following ingredients:

| | |
|---|---|
| Polymer Solution A: | 60 g |
| HNO₃, 70% concentration by weight in water | 10g |
| AgNO₃, 50% concentration by weight in water | 4 g |
| hydrogen peroxide, 35% concentration by weight in water | 0.5 g |

The resulting solution B has calculated value of 1.7% silver by weight.

Treatment solutions were made with tap water, solution B, and softener. The amount of solution B was 0.8 parts by weight per hundred parts by weight of treatment solution. The amount of softener was 3 parts by weight per hundred parts by weight of treatment solution. The pH of each treatment solution was adjusted to 5.5 with a sodium hydroxide solution.

100% polyethylene terephthalate (PET) fabric was treated using a Mathis Padder running at a speed of 3 m/minute. Excess solution was squeezed from the web by passing the web through a roller nip with a pressure of 3 bar. The fabric was then dried in an oven at 150°C for 2 minutes. The dried treated fabric was laundered using home washing machine using the ISO 6330 "Textiles - Domestic washing and drying procedures for textile testing" method (second Edition, 2000-12-15) with several modifications. Laundering was performed as follows:
Washer: Top loading, agitator type (Type B per ISO 6330)
Cycle: Normal (12 minute agitation wash, followed by a single rinse, then rinse/spin) Water Temperature: Wash: 40 ± 2°C (105°F); and Rinse: cold, temperature not
monitored
Water hardness is monitored, range is 100-120 ppm
Load size: Small, 44 L of water
Detergent: Tide™ Free Ultra 2X, 2.4 ml (yields running suds of not more than 3 cm at
end of washing cycle per ISO 6330)
Ballast: Usually 2 t-shirts used for ballast, but depends on volume of specimens to be
tested.
Specimens are put in delicate laundry bags to protect during washing.
Specimens are line dried at the end of the day

Softeners used were as follows:
Lavasoft™ MEC = microemulsion of an amino silicone polymer (Dystar)
DC-1716 = cationic microemulsion of cross-linked OH polydimethylsiloxane (Dow
Corning)
DC2-8035 = amino functional silicone polymer (Dow Corning)
DC2-8194 = amine functional silicone polymer (Dow Corning)
Ultratex™ SI = macroemulsion of an amino softener (Hunstman)
Ultratex™ FMI = microemulsion of an amino softener (Huntsman)
Magnasoft™ SRS = block copolymer silicone-aminopolyethyleneoxide (GE)
Evosoft™ HSP = hydrophilic silicone micro-emulsion

Samples of fabric were taken after 0 or 20 or 50 wash cycles and analyzed for silver by X-ray fluorescence and Inductively Coupled Plasma Mass Spectrometry techniques. Each sample was tested in duplicate. Data are shown in Table 1 (Comparative examples have "C" in the Example Number).

**Table 1**

| | | Ag (ppm) | | |
|---|---|---|---|---|
| Example No. | Softener | 0 Wash | 20 Wash | 50 Wash |
| C1 | fabric with no treatment at all | < 2 | < 2 | < 2 |
| | | <2 | <2 | <2 |
| C2 | none | 242 | 2-5 | <2 |
| | | 239 | 2-5 | <2 |
| 3 | LavaSoft™ MEC (Dystar) | 239 | 38 | 24 |
| | | 238 | 27 | 15 |
| 4 | DC-1716 (micro) | 222 | 9 | <2 |
| | | 225 | 5 | < 2 |
| 5 | DC-2-8035 (amino macro) | 225 | 29 | 9 |
| | | 220 | 26 | 12 |
| 6 | DC-2-8194 (amino micro) | 216 | 29 | 6 |
| | | 214 | 22 | 8 |
| 7 | LavaSoft™ MEC (Dystar) | 228 | 16 | 9 |
| | | 230 | 17 | 13 |
| 8 | Ultratex™ SI (macro, Huntsman) | 250 | 8 | <2 |
| | | 247 | 9 | < 2 |
| 9 | Ultratex™ FMI (micro, Huntsman) | 222 | 6 | 2-5 |
| | | 224 | 6 | 2-5 |
| C10 | Magnasoft™ SRS | 228 | <2 | <2 |
| | | 241 | <2 | <2 |
| C11 | Evosoft™ HSP | 231 | 2 | <2 |
| | | 236 | 2 | <2 |

| | | | | |
|---|---|---|---|---|
| C10 is a comparative because Magnasoft™ SRS is soluble in water and is not dispersed. C11 is a comparative because Evosoft™ HSP is not amino functional. | | | | |

The Example formulations show better silver retention than the comparative formulations. The silicones with amino functionality perform the best.

## Claims

1. An aqueous composition useful for treating fabric comprising
(i) a complex of silver ion with a copolymer and
(ii) a dispersed amine-functional softener,
wherein said copolymer comprises
(a) 60-95 wt % polymerized units of one or more monomer X, wherein said monomer X is an ethylenically unsaturated compound having a substituent group selected from an unsaturated or aromatic heterocyclic group having at least one nitrogen atom; and
(b) 5-40 wt % polymerized units of one or more monomer Y, wherein said monomer Y is an ethylenically unsaturated compound selected from carboxylic acids, organosulfuric acids, sulfonic acids, phosphonic acids, esters comprising polymerized units of ethylene oxide, and mixtures thereof.

2. The composition of claim 1, wherein said composition has pH from 3 to 7.

3. The composition of claim 2, wherein monomer X is N-vinylimidazole.

4. The composition of claim 1, wherein said amine-functional softener is a silicone polymer.

5. A method of treating fabrics comprising contacting said fabric with the composition of claim 1 at pH from 3 to 7.
